Europäisches Patentamt

(19) **European Patent Office** (11) Numéro de publication: **0 130 883**
**B1**
**Office européen des brevets**

(12) **FASCICULE DE BREVET EUROPEEN**

(45) Date de publication du fascicule du brevet: (51) Int. Cl.⁴: **F 16 D 55/224,** F 16 D 55/26,
**03.06.87** F 16 D 3/06, F 16 H 57/00,
F 16 D 65/12
(21) Numéro de dépôt: **84401278.1**

(22) Date de dépôt: **20.06.84**

(54) Perfectionnements apportés aux freins multidisques.

(30) Priorité: **30.06.83 FR 8310918** (73) Titulaire: **BENDIX France, 126, rue de Stalingrad,**
**F-93700 Drancy (FR)**

(43) Date de publication de la demande:
**09.01.85 Bulletin 85/2** (72) Inventeur: **Méry, Jean Claude, 61 rue Emile Zola,**
**F-93320 Pavillons sous Bois (FR)**
Inventeur: **Thioux, Alain, 9 Allée des Bordes,**
**F-94430 Chennevieres (FR)**
(45) Mention de la délivrance du brevet: Inventeur: **Carré, Jean Jacques, 59 Boulevard de l'Est,**
**03.06.87 Bulletin 87/23** **F-93340 Le Raincy (FR)**

(84) Etats contractants désignés:
**DE GB IT NL SE** (74) Mandataire: **Poidatz, Emmanuel et al, Service Brevets**
**Bendix 44 rue François 1er, F-75008 Paris (FR)**

(56) Documents cités:
**EP - A - 0 049 179**
**DE - A - 3 050 284**
**DE - B - 1 205 345**
**FR - A - 1 374 262**
**GB - A - 1 087 988**
**GB - A - 2 049 845**

## Description

L'invention se rapporte à un frein multidisque, comprenant un premier disque rotatif solidaire d'un moyeu qui est relié à un organe à freiner tournant dans un sens de rotation déterminé, et un second disque rotatif monté sur le moyeu avec possibilité de coulissement parallèlement à la direction de l'axe de celui-ci, les axes du moyeu et desdits disques étant confondus, ainsi qu'un ensemble de patins de friction comportant des garnitures de friction susceptibles d'être appliquées sur les faces des disques par un dispositif d'actionnement tel qu'un vérin hydraulique à étrier; le second disque est porté par un manchon cannelé intérieurement qui peut coulisser sur une partie du moyeu cannelée extérieurement, l'engrènement mutuel de ces cannelures assurant l'entraînement en rotation du second disque par le moyeu. En variante, les deux disques peuvent être montés coulissants sur le moyeu et pourvus chacun à cet effet d'un manchon cannelé intérieurement engrenant avec les cannelures du moyeu, ainsi qu'illustré par le brevet GB-A-2049845.

Lorsqu'on déclenche le fonctionnement d'un tel frein à disques, le jeu existant inévitablement entre les cannelures du manchon et du moyeu peut entraîner un claquement causé par la brusque venue en contact des flancs des cannelures qui travaillent durant le freinage pour transmettre le couple de ralentissement du ou des disques au moyeu. Ce phénomène peut s'accompagner de vibrations dans les cannelures entraînant la formation de poudre rouge ($Fe_2O_3$).

Afin de remédier à ces inconvénients, qui peuvent se révéler catastrophiques pour les cannelures, l'invention propose d'incorporer aux freins du genre indiqué un agencement développant entre le manchon et le moyeu un couple qui les sollicite autour de leur axe commun dans un sens tel qu'il tende à mettre en appui mutuel les flancs des cannelures du moyeu et du manchon par lesquels se transmet l'effort de freinage au moyeu. Ainsi, à chaque fois qu'un freinage sera déclenché, les flancs des cannelures appelés à travailler lorsque le moyeu tourne dans son sens normal se trouveront déjà appliqués mutuellement en contact, et aucun claquement ne pourra plus dès lors se produire.

De tels agencements sont déjà connus, notamment dans le domaine des accouplements, et sont par exemple illustrés par les brevets DE-B-1205345 et FR-A-1374262. Ils comportent généralement un ou plusieurs organes élastiques reçus sous précontrainte dans des logements formés par suppression partielle ou totale d'une ou de plusieurs cannelures entre une cannelure du moyeu et une cannelure du manchon, l'organe élastique prenant appui sur ces dernières cannelures et tendant à les écarter l'une de l'autre. De préférence, l'appui de l'organe élastique sur les cannelures s'effectue sur des parois radiales de ces dernières formées par enlèvement de matière, par exemple par suppression d'une demi-cannelure, lesdites parois radiales constituant alors les parois d'extrémité du logement.

La présente invention se donne pour but d'améliorer de tels agencements et notamment d'en faciliter le montage et la mise sous précontrainte.

L'invention propose à cet effet que l'élément élastique soit constitué par un bloc de caoutchouc ou de matière analogue, de dimensions en section transversale voisines de celles du logement qui le reçoit, ce bloc étant mis en expansion par introduction d'une cheville dans un conduit interne longitudinal qui y est ménagé à cet effet. C'est la précontrainte résultante qui crée le couple désiré entre le manchon et le moyeu. Ledit bloc comporte avantageusement sur ses faces latérales d'appui un revêtement favorisant le glissement sur la matière des cannelures, lequel peut être constitué par une lamelle de tôle rapportée sur chaque face latérale du bloc. De préférence, le bloc est formé de deux demi-blocs identiques accolés symétriquement suivant le plan radial médian du logement, chacun d'eux comportant une moitié du conduit longitudinal précité.

Afin de répartir autour de l'axe du manchon et du moyeu les efforts engendrés par l'agencement créateur de couple, il convient que celui-ci comprenne plusieurs éléments élastiques tels que décrits ci-dessus régulièrement espacés sur le pourtour du manchon et du moyeu et agissant dans le même sens.

D'autres caractéristiques et avantages de l'invention ressortiront plus clairement de la description qui va suivre, en regard des dessins annexés, d'un exemple de réalisation non limitatif.

La fig. 1 représente en coupe axiale un frein à disques agencé conformément à l'invention;

la fig. 2 représente une partie du système de cannelures doté d'un bloc élastique, en coupe par un plan perpendiculaire à l'axe des disques;

la fig. 3 représente, en perspective et à plus grande échelle, le bloc élastique de la fig. 2;

la fig. 4 représente une coupe suivant la ligne IV–IV de l'objet de la fig. 2.

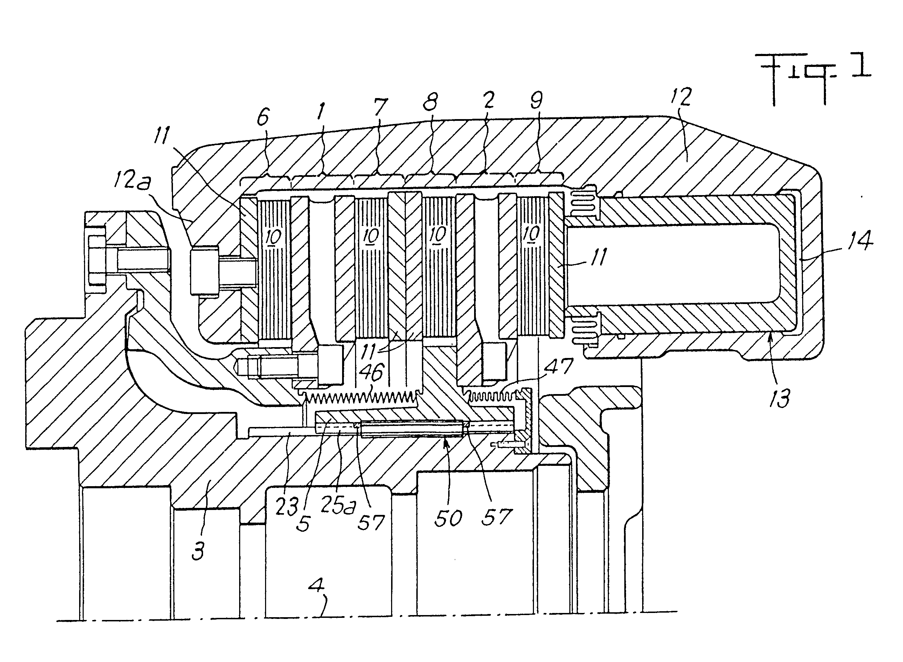

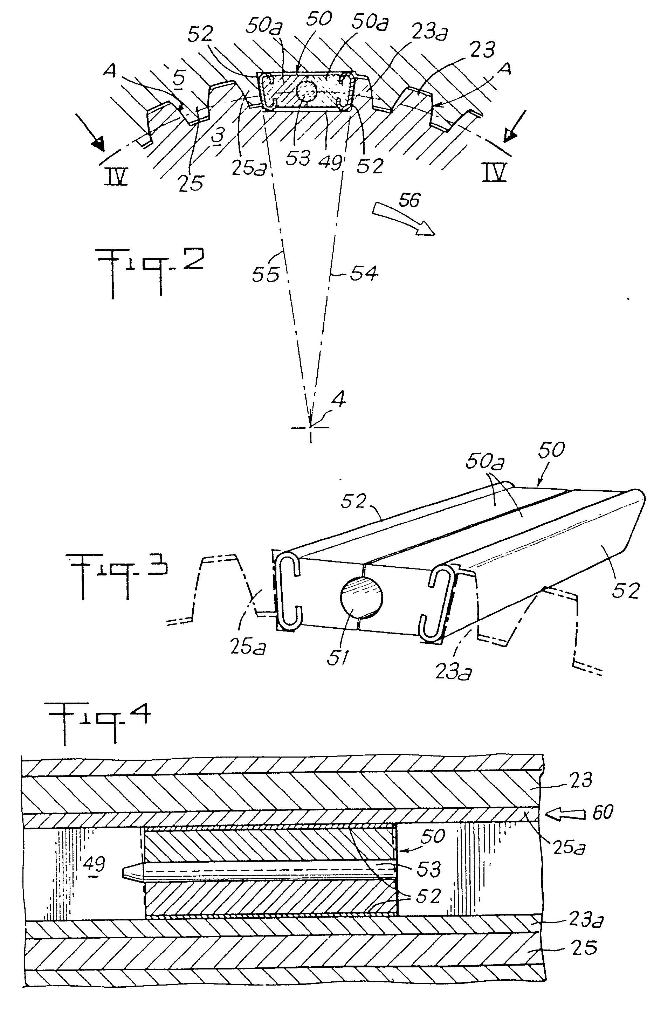

Le frein multidisque représenté sur la fig. 1 comporte un premier disque rotatif 1 dit extérieur et un second disque rotatif 2 dit intérieur, tous deux montés sur un moyeu 3 dont l'axe 4 coïncide avec ceux des disques 1 et 2. Tandis que le disque 1 est solidaire du moyeu 3, donc fixe dans la direction de l'axe 4, le disque 2 peut se déplacer suivant cette direction, étant fixé à un manchon 5 cannelé intérieurement qui peut coulisser sur une partie cylindrique cannelée du moyeu 3 autour de laquelle il est engagé, son entraînement en rotation par le moyeu étant assuré par l'engrènement de ses cannelures 25 avec les cannelures 23 du moyeu 3 (fig. 2).

Chaque disque de frein 1 ou 2 coopère avec une paire de patins de friction 6 et 7 ou 8 et 9 disposés de part et d'autre du disque de frein 1 ou 2 correspondant et susceptibles d'être appliqués contre les faces latérales de celui-ci. Chacun de ces patins de friction 6, 7, 8, 9 comprend une garniture de friction 10 et une plaque porte-garniture 11, chaque garniture 10 coopérant avec la face adjacente du disque 1 ou 2 correspondant.

Un étrier 12 est disposé par-dessus les disques de frein 1, 2 et leurs patins de friction 6, 7, 8, 9 de façon à coiffer l'ensemble disques-patins. Dans la partie intérieure de l'étrier 13 est prévu un moteur de commande tel qu'un vérin hydraulique dont le piston 14 est susceptible d'agir sur la plaque porte-garniture 11 du patin intérieur 9 et, par réaction et grâce à son nez échancré 12a, sur la plaque porte-garniture 11 du patin extérieur 6, de manière à commander le serrage de l'ensemble disques-patins suivant la direction de l'axe 4 et à faire ainsi naître la friction de freinage entre chaque garniture 10 et la face de disque conjugée. Cette action s'accompagne d'un déplacement du disque intérieur 2 parallèlement à l'axe 4 par coulissement du manchon 5 par rapport au moyeu 3, dont les cannelures, parallèles à l'axe 4, sont protégées des salissures qui pourraient les encrasser par des soufflets souples 46, 47 de forme cylindrique enveloppant le manchon 5 et la partie de moyeu sur laquelle il coulisse.

Dans les cannelures 23, 25 mutuellement engrenées sont réalisés plusieurs logements 49 dont l'un est visible sur la fig. 2. Chacun de ces logements, répartis angulairement de façon régulière sur le pourtour (par exemple au nombre de trois espacés de 120°) résulte de la suppression par enlèvement de matière d'un cannelure et demie sur le moyeu 3 comme sur le manchon coulissant 5. Les demi-cannelures subsistantes 23a et 25a, appartenant respectivement au moyeu 3 et au manchon 5, limitent latéralement le logement 49 par des faces respectivement contenues dans des plans radiaux 53 et 54. En direction radiale, le logement 49 offre une épaisseur sensiblement égale à la hauteur des cannelures 23, 25.

Dans chacun des logements 49 est inséré un bloc élastique 50 en caoutchouc ou en élastomère, de forme générale sensiblement parallélépipédique, composé de deux demi-blocs 50a identiques et percé longitudinalement d'un conduit central 51 (fig. 3) de section circulaire destiné à recevoir une cheville 53. Chaque demibloc 50a est pourvu d'une lamelle de métal 52 rapportée (par exemple par adhérisation ou surmoulage) sur sa face latérale opposée à celle qui comporte une moitié du conduit 51. La largeur des blocs 50 est sensiblement égale à celle des logements 49, c'est-à-dire à la distance séparant les faces planes des demi-cannelures 23a, 25a limitant chaque logement.

Une fois un bloc 50 mis en place dans un logement 49, on enfonce dans son conduit 51 ladite cheville 53, en forme de crayon, de diamètre un peu supérieur à celui du conduit 51. Une certaine expansion est ainsi donnée au bloc 50, qui a pour effet de repousser l'une de l'autre les demi-cannelures 23a, 25a sur lesquelles le bloc 50 prend appui par ses lamelles latérales 52, et par là d'exercer un couple différentiel sur le moyeu 3 et le manchon 5 qui élimine le jeu entre ces éléments dans la liaison d'entraînement en rotation du manchon 5 par le moyeu 3.

Plus précisément, afin d'écarter tout risque de claquement au déclenchement d'un freinage, l'ordre des demi-cannelures 23a, 25a d'appui de chaque bloc 50 par rapport au sens de rotation 56 du moyeu 3 est choisi de manière que le couple que ce bloc exerce entre le manchon 5 et le moyeu 3 tende à presser les uns contre les autres les flancs A des cannelures qui travaillent lors d'un freinage. C'est pourquoi la demi-cannelure en aval du bloc 50, suivant le sens 56, appartient au manchon 5 et la demi-cannelure en amont dudit bloc au moyeu 3.

Dans la direction longitudinale parallèle à l'axe 4, chaque bloc 50 est arrêté par une paire de bagues de butée 57 (fig. 1) solidaires du manchon 5 (ou en variante du moyeu 3).

La présence des blocs élastiques 50 procure un effet complémentaire que se manifeste à la fin de chaque opération de freinage. Au cours d'une telle opération, le disque 2 et son manchon porteur 5 se déplacent quelque peu vers le côté extérieur suivant la flèche 60 (fig. 4), ce qui induit, malgré le faible coefficient de frottement entre les métaux des lamelles 52 et des cannelures d'appui 23a, 25a, une déformation de cisaillement dans les blocs 50, dont chacun prend alors la configuration indiquée en tirets. La force emmagasinée ainsi dans les blocs 50 est restituée par ceux-ci en fin de freinage et fournit un rappel axial contribuant à ramener le disque 2 en position de repos.

**Revendications**

1. Frein multidisque, comprenant un premier disque rotatif (1) solidaire d'un moyeu (3) qui est relié à un organe tournant à freiner et un second disque rotatif (2) monté sur le moyeu avec possibilité de coulissement parallèlement à l'axe de celui-ci, les axes du moyeu et desdits disques étant confondus, ainsi qu'un ensemble de patins de friction (6, 7, 8, 9) comportant des garnitures de friction susceptibles d'être appliquées sur les faces des disques par un dispositif d'actionnement tel qu'un vérin hydraulique à étrier, le second disque étant porté par un manchon (5) cannelé intérieurement qui peut coulisser sur une partie du moyeu cannelée extérieurement, l'engrènement mutuel de ces cannelures assurent l'entraînement en rotation du second disque par le moyeu, ce frein comportant en outre un agencement développant entre le manchon (5) et le moyeu (3) en couple qui les sollicite autour de leur axe commun (4) dans un sens tel qu'il tende à mettre en appui mutuel des flancs (A) des cannelures (23, 25) du moyeu et du manchon par lesquels se transmet l'effort de freinage au moyeu, ledit agencement comprenant au moins un élément élastique (50) disposé dans un logement (49) réalisé par suppression partielle ou totale d'une ou de plusieurs cannelures entre une cannelure (23a) du moyeu (3) et une cannelure (25a) du manchon (5), l'élément élastique (50) prenant appui sur des surfaces planes radiales formées sur ces dernières cannelures qu'il tend ainsi à écarter l'une de l'autre, caractérisé par le fait que l'élément élastique est constitué par un bloc (50) de caoutchouc ou de matière analogue, de dimensions en section transversale voisines de celles du logement (49) qui le reçoit, ce bloc étant mis en expansion par introduction d'une cheville (53) dans un conduit interne longitudinal (51) qui y est ménagé à cet effet.

2. Frein selon la revendication 1, caractérisé par le fait que le bloc (50) comporte sur ses faces latérales d'appui en revêtement favorisant le glissement sur la matière des cannelures.

3. Frein selon la revendication 2, caractérisé par le fait que ce revêtement est constitué par une lamelle de tôle (52) rapportée sur chaque face latérale du bloc (50).

4. Frein selon l'une quelconque des revendications 1 à 3, caractérisé par le fait que le bloc (50) est formé de deux demi-blocs (50a) identiques accolés symétriquement suivant le plan radial médian du logement (49), chacun d'eux comportant une moitié du conduit longitudinal (51).

5. Frein selon la revendication 1, caractérisé par le fait que l'agencement créateur de couple comprend plusieurs éléments élastiques selon l'une quelconque des revendications précédentes, régulièrement espacés sur le pourtour du manchon (5) et du moyeu (3) et agissant dans le même sens.

## Claims

1. Multi-disc brake comprising a first rotating disc (1) fixed to a hub (3) which is connected to a rotating member to be braked, and a second rotating disc (2) mounted on the hub adapted to slide on the hub parallel to the axis thereof, the axes of the hub and said discs being identical, and an arrangement of friction members (6, 7, 8, 9) comprising friction layers adapted to be urged against the faces of the discs by an actuating device such as a hydraulic caliper motor, the second disc being supported by an internally serrated sleeve (5) adapted to slide on an externally serrated portion of the hub, the mutual engagement of said serrations assuring the rotary drive of the second disc by the hub, said brake further comprising means for generating a torque between the sleeve (5) and the hub (3), which torque biases them about their common axis (4) in a sense such that it tends to cause a mutual engagement of the flanks (A) of the serrations (23, 25) of the hub and the sleeve by which the brake force is transmitted to be hub, said means comprising at least one resilient element (50) disposed in a seat (49) formed by partial or total removal of one or a plurality of serrations between a serration (23a) of the hub (3) and a serration (25a) of the sleeve (5), the resilient element (50) engaging radical plane surfaces formed on said latter serrations which it thus tends to move apart from each other, characterized in that the resilient element is comprised of a block (50) of caoutchouc or similar material, having cross-sectional dimensions similar to those of the seat (49) which it receives, said block being expanded by introducing a pin (53) into an internal longitudinal passage (51) which is provided there for this purpose.

2. Brake according to claim 1, characterized in that the block (50) comprises on its lateral abutment faces a lining for improving its sliding on the material of the serrations.

3. Brake according to claim 2, characterized in that the lining is comprised of a steel plate (52) provided on each lateral face of the block (50).

4. Brake according to any of claims 1 to 3, characterized in that the block (50) is formed by two identical half-blocks (50a) disposed symmetrically with respect to the radial centerplane of the seat (49), each of them comprising one half of the longitudinal passage (51).

5. Brake according to claim 1, characterized in that the toreque-generating means comprise a plurality of resilient elements according to any of the preceding claims, which are evenly spaced on the circumference of the sleeve (5) and the hub (3) and which act in the same sense.

## Patentansprüche

1. Mehrscheibenbremse mit einer ersten Bremsscheibe (1), die an einer mit einem abzubremsenden Drehkörper verbundenen Nabe (3) festgelegt ist, und einer zweiten Bremsscheibe (2), die auf der Nabe parallel zur Nabenachse gleitbar gelagert ist, wobei die Achsen der Nabe und der Bremsscheiben zusammenfallen, sowie einer Anordnung von Reibbacken (6, 7, 8, 9), die mit Reibbelägen versehen sind, die gegen die Seitenflächen der Bremsscheiben durch eine Betätigungsvorrichtung wie einen hydraulischen Bremssattelmotor andrückbar sind, wobei die zweite Bremsscheibe von einer innen mit einer Kerbverzahnung versehenen Hülse (5) getragen wird, die auf einem aussen mit einer Kerbverzahnung versehenen Abschnitt der Nabe gleiten kann, wobei der gegenseitige Eingriff dieser Kerbverzahnungen den Drehantrieb der zweiten Bremsscheibe durch die Nabe sicherstellt, wobei die Bremse ausserdem eine Anordnung aufweist, die zwischen der Hülse und der Nabe (3) ein Moment entwickelt, welches sie um ihre gemeinsame Achse (4) vorspannt, und zwar im Sinne einer gegenseitigen Anlage der Seiten (A) der Kerbverzahnungen (23, 25) der Nabe und der Hülse, durch welche die Bremskraft auf die Nabe übertragen wird, wobei diese Anordnung mindestens ein elastisches Teil (50) aufweist, das in einer Aufnahme (49) angeordnet ist, welche durch teilweises oder gänzliches Weglassen einer oder mehrerer Kerben zwischen einer Kerbe (23a) der Nabe (3) und einer Kerbe (25a) der Hülse (5) gebildet wird, wobei das elastische Teil (50) an den radialen ebenen Flächen anliegt, die an den letztgenannten Kerben gebildet sind, welche es somit voneinander wegzudrücken sucht, dadurch gekennzeichnet, dass das elastische Teil von einem Block (50) aus Kautschuk oder ähnlichem Material gebildet wird, dessen Querschnittsabmessungen ungefähr denen der ihn aufnehmenden Aufnahme (49) entsprechen, wobei dieser Block durch Einführen eines Stiftes (53) in einen inneren Längskanal (51) aufgeweitet wird, welcher dort zu diesem Zweck gebildet ist.

2. Bremse nach Anspruch 1, dadurch gekennzeichnet, dass der Block (50) an seinen seitlichen Anlageflächen eine Verkleidung aufweist, die das Gleiten am Material der Kerbverzahnung begünstigt.

3. Bremse nach Anspruch 2, dadurch gekennzeichnet, dass die Verkleidung von einer Stahlscheibe (52) gebildet wird, die an jeder Seitenfläche des Blockes (5) angebracht ist.

4. Bremse nach einem der Ansprüche 1–3, dadurch gekennzeichnet, dass der Block (50) von zwei identischen Halbblöcken (50a) gebildet wird, die bezüglich der radialen Mittelebene der Aufnahme (49) symmetrisch aneinander angesetzt sind, wobei jeder Halbblock eine Hälfte des Längskanals (51) aufweist.

5. Bremse nach Anspruch 1, dadurch gekennzeichnet, dass die momenterzeugende Anordnung mehrere elastische Teile nach einem der vorhergehenden Ansprüchen aufweist, die um den Umfang der Hülse (5) und der Nabe (3) gleichmässig verteilt angeordnet sind und in der gleichen Richtung wirken.

Fig. 1

0130883

Fig-2

Fig-3

Fig-4

9